(19) Europäisches Patentamt
European Patent Office
Office européen des brevets

(11) **EP 4 783 074 A1**

(12) **EUROPEAN PATENT APPLICATION**

(43) Date of publication:
**29.07.2026 Bulletin 2026/31**

(21) Application number: **25226118.5**

(22) Date of filing: **22.12.2025**

(51) International Patent Classification (IPC):
**G06N 7/00** (2023.01)   **G06N 5/022** (2023.01)

(52) Cooperative Patent Classification (CPC):
**G06N 7/00; G06N 5/022**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **24.01.2025 JP 2025010226**

(71) Applicant: **FUJITSU LIMITED**
**Kawasaki-shi, Kanagawa 211-8588 (JP)**

(72) Inventor: **YANASE, Takashi**
**Kawasaki-shi, Kanagawa, 211-8588 (JP)**

(74) Representative: **Hoffmann Eitle**
**Patent- und Rechtsanwälte PartmbB**
**Arabellastraße 30**
**81925 München (DE)**

(54) **INFORMATION PROCESSING COMPUTER PROGRAM, INFORMATION PROCESSING DEVICE, AND INFORMATION PROCESSING METHOD**

(57)   A computer obtains a causal relationship including a plurality of explanatory variables and a response variable by performing causal discovery using a subset extracted from a data aggregate including a value of each of the explanatory variables and a value of the response variable on the basis of each of a plurality of conditions related to ranges of the values of the explanatory variables. The computer obtains a causal effect of any explanatory variable of the explanatory variables on the response variable on the basis of the causal relationship obtained on the basis of each of the conditions. The computer obtains a determination result of similarity in the causal effects obtained on the basis of the respective conditions, by determining the similarity. The computer obtains an identified range of the value of each of the explanatory variables in which the causal effects have a predetermined sign on the basis of the determination result of the similarity and outputs range information indicating the identified range.

FIG.3

301

INFORMATION PROCESSING DEVICE

311 ~ CAUSAL DISCOVERY UNIT

312 ~ DETERMINATION UNIT

313 ~ RANGE IDENTIFICATION UNIT

314 ~ OUTPUT UNIT

EP 4 783 074 A1

**Description**

FIELD

The present disclosure relates to information processing.

BACKGROUND

Statistical causal discovery is a technique for assuming a causal relationship between a plurality of variables from the aggregate of data of each of the variables.

Regarding the relationship between variables, a factor analysis method for identifying an explanatory variable that is considered to be a factor determining a change in the value of a response variable is known (for example, see International Publication Pamphlet No. WO 2018/096683). A prediction model creating method for creating a prediction model capable of providing feedback to an explanatory variable in an operation process is also known (for example, see Japanese Laid-open Patent Publication No. 2023-063162).

It is an object in one aspect to obtain the range of a variable in which causal effects having a predetermined sign are yielded from a data aggregate including values of each of a plurality of variables with high accuracy.

SUMMARY

According to an aspect, an information processing computer program causes a computer to execute the following processes.

The computer obtains a causal relationship including a plurality of explanatory variables and a response variable by performing causal discovery using a subset extracted from a data aggregate based on each of a plurality of conditions, the data aggregate including a value of each of the explanatory variables and a value of the response variable, the conditions being related to ranges of the values of the explanatory variables. The computer obtains a causal effect of any explanatory variable of the explanatory variables on the response variable based on the causal relationship obtained based on each of the conditions.

The computer obtains a determination result of similarity in the causal effects obtained based on the respective conditions, by determining the similarity. The computer obtains an identified range of the value of each of the explanatory variables based on the determination result of the similarity, the causal effects having a predetermined sign in the identified range, and outputs range information indicating the identified range.

BRIEF DESCRIPTION OF DRAWINGS

FIG. 1 is a diagram illustrating a discovery result of conditional causal discovery;
FIG. 2 is a diagram illustrating data used in the conditional causal discovery;
FIG. 3 is a functional configuration diagram of an information processing device of an embodiment;
FIG. 4 is a flowchart of information processing;
FIG. 5 is a functional configuration diagram of a variable range identification device;
FIG. 6 is a diagram illustrating a data aggregate;
FIG. 7 is a diagram illustrating a condition list;
FIG. 8A is a diagram illustrating a causal graph;
FIG. 8B is a diagram illustrating a causal graph;
FIG. 9 is a diagram illustrating causal effect information;
FIG. 10A is a diagram illustrating an adjacency matrix;
FIG. 10B is a diagram illustrating an adjacency matrix;
FIG. 11 is a diagram illustrating numerical ranges of explanatory variables in which causal effects having the same signs are yielded;
FIG. 12 is a diagram illustrating range information;
FIG. 13 is a flowchart of variable range identification processing;
FIG. 14 is a flowchart of condition extraction processing;
FIG. 15 is a flowchart of causal discovery processing;
FIG. 16 is a flowchart of distance calculation processing;
FIG. 17 is a flowchart of rate-of-change calculation processing;
FIG. 18 is a flowchart of similarity determination processing;

FIG. 19 is a flowchart of range identification processing;
FIG. 20 is a flowchart of range update processing; and
FIG. 21 is a hardware configuration diagram of an information processing device.

DESCRIPTION OF EMBODIMENT

When the numerical range of an explanatory variable in which causal effects having the same sign, positive or negative, are yielded is obtained using a discovery result of statistical causal discovery on a data aggregate, the accuracy of the obtained numerical range may decrease.

Note that this problem arises in cases where the numerical range of an explanatory variable in which causal effects having the same sign are yielded is obtained using not only statistical causal discovery but also various types of causal discovery.

Preferred embodiments of the present invention will be explained with reference to accompanying drawings.

In conditional causal discovery, a variable other than a response variable among a plurality of variables included in a data aggregate is used as an explanatory variable, the explanatory variable is discretized, and a plurality of conditions having a correlation with the response variable are extracted.

Each of the conditions is, for example, expressed by an inequality representing the numerical range of one or a plurality of explanatory variables.

Then, a subset of data satisfying each condition is extracted from the data aggregate, and statistical causal discovery is performed using each subset to obtain a causal relationship between variables for each condition.

The causal relationship is, for example, represented by a causal graph. The causal graph includes a plurality of nodes representing causes or effects in the causal relationship and edges directed from the nodes representing the causes to the nodes representing the effects. Each of the edges is given a causal effect being an index indicating the strength of influence of the cause on the effect as a weight. If the causal effect is positive, an increase in the variable value of the cause also increases the variable value of the effect. If the causal effect is negative, an increase in the variable value of the cause decreases the variable value of the effect.

From the causal relationship obtained using each condition, the causal effect of a specific explanatory variable on the response variable can be obtained. Then, the sign of the causal effect obtained using each condition is associated with the numerical range of the explanatory variable indicated by that condition, which can obtain a numerical range of the explanatory variable in which causal effects having the same sign, positive or negative, are yielded.

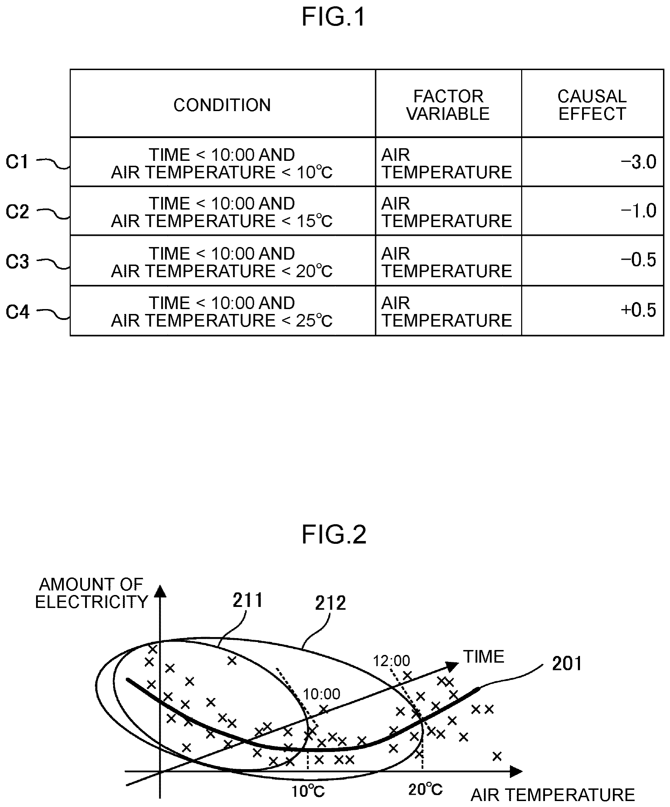

FIG. 1 illustrates an example of the discovery result of conditional causal discovery. The conditions indicate numerical ranges of explanatory variables. In this example, the explanatory variables included in the conditions are time and air temperature. The factor variables indicate any of the explanatory variables included in the conditions. The causal effects indicate causal effects of the factor variables on the response variables. In this example, the factor variables are air temperature, and the response variables are the amounts of electricity. The amounts of electricity are, for example, the amounts of electricity consumed in a facility, such as a university campus and a shopping mall.

If air temperature rises, a cooling system is used, which increases the amount of electricity. If air temperature drops, a heating system is used, which increases the amount of electricity. Thus, in a high air temperature situation, the causal effect of the air temperature on the amount of electricity is positive, and in a low air temperature situation, the causal effect of the air temperature on the amount of electricity is negative. In this case, it is convenient to know at what temperature and below negative causal effects are yielded and at what temperature and above positive causal effects are yielded.

For example, a condition C1 is "Time < 10:00 and Air Temperature < 10°C". The condition C1 indicates that the time range is before 10:00 and the air temperature range is below 10°C. The signs of the causal effects obtained using the conditions C1 to C3 are negative, and the sign of the causal effect obtained using the condition C4 is positive. In this case, the maximum range of the explanatory variables in which negative causal effects are yielded is "Time < 10:00 and Air Temperature < 20°C".

FIG. 2 illustrates example data used in the conditional causal discovery in FIG. 1. Symbols "×" indicate points in a three-dimensional space in which the time, the air temperature, and the amounts of electricity are plotted. The air temperature and the amount of electricity indicated by "×" are measured values at the time indicated by the same "×". A curve 201 represents an approximate curve with which the distribution of a plurality of the symbols "×" is approximated.

A range 211 corresponds to the numerical ranges of the explanatory variables indicated by the condition C1 in FIG. 1, and a range 212 corresponds to the numerical ranges of the explanatory variables indicated by the condition C3. In this example, in the range of "Time < 10:00 and 10°C ≤ Air Temperature < 20°C" in which the range 211 is subtracted from the range 212, the causal effects of the air temperature on the amount of electricity are 0 or positive. Thus, the maximum range of the explanatory variables in which negative causal effects are yielded is "Time < 10:00 and Air Temperature < 10°C".

However, the causal effects in the range of "Time < 10:00 and 10°C ≤ Air Temperature < 20°C" are unclear from the discovery result in FIG. 1, so that the range 212 containing this range is identified as the maximum range in which negative causal effects are yielded. There is a discrepancy between the identified range 212 and the range 211 being the actual maximum range.

In this way, when the numerical range of an explanatory variable in which causal effects having the same sign, positive or negative, are yielded is obtained using a discovery result of statistical causal discovery on a data aggregate, the accuracy of the obtained numerical range may decrease.

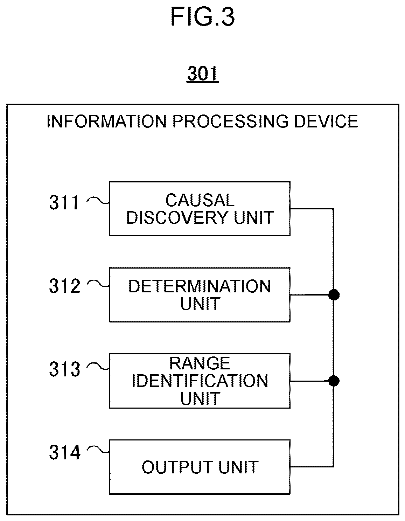

FIG. 3 illustrates an example function configuration of an information processing device (computer) of the embodiment. An information processing device 301 in FIG. 3 includes a causal discovery unit 311, a determination unit 312, a range identification unit 313, and an output unit 314.

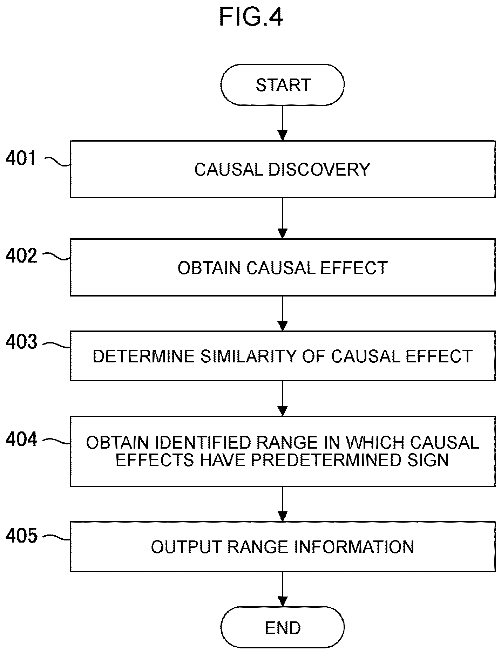

FIG. 4 is a flowchart illustrating example information processing performed by the information processing device 301 in FIG. 3. First, the causal discovery unit 311 performs causal discovery using a subset extracted from a data aggregate including values of each of a plurality of explanatory variables and values of a response variable on the basis of each of a plurality of conditions to obtain a causal relationship including the explanatory variables and the response variable (Step 401). Each of the conditions indicates the range of the value of each of the explanatory variables.

Next, the causal discovery unit 311 obtains a causal effect of any of the explanatory variables on the response variable on the basis of the causal relationship obtained on the basis of each of the conditions (Step 402).

Next, the determination unit 312 determines similarity in the causal effects obtained on the basis of the respective conditions to obtain a determination result of the similarity (Step 403). Next, the range identification unit 313 obtains an identified range of the value of each of the explanatory variables in which the causal effects have a predetermined sign, on the basis of the determination result of the similarity (Step 404). Then, the output unit 314 outputs range information indicating the identified range (Step 405).

With the information processing device 301 in FIG. 3, the range of a variable in which causal effects having the predetermined sign are yielded can be obtained from the data aggregate including the values of each of the variables with high accuracy.

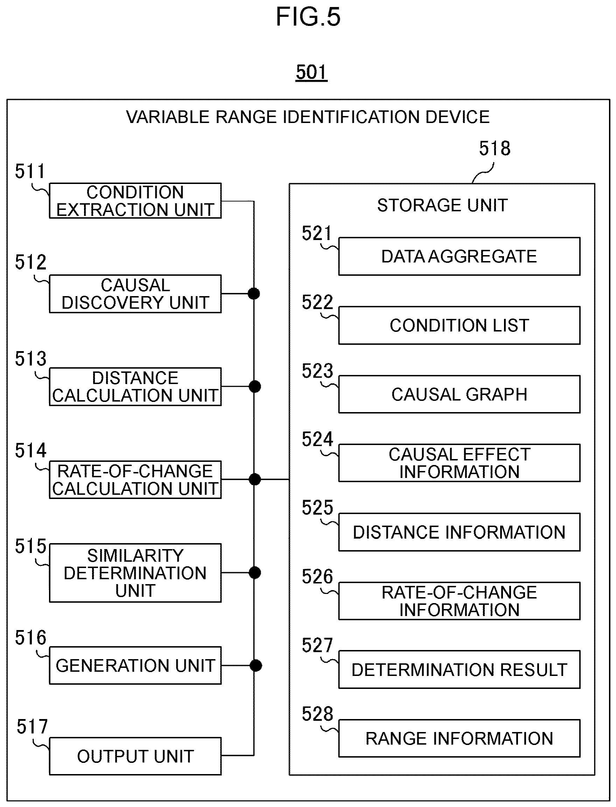

FIG. 5 illustrates an example functional configuration of a variable range identification device corresponding to the information processing device 301 in FIG. 3. A variable range identification device 501 in FIG. 5 includes a condition extraction unit 511, a causal discovery unit 52, a distance calculation unit 513, a rate-of-change calculation unit 514, a similarity determination unit 515, a generation unit 516, an output unit 517, and a storage unit 518.

A causal discovery unit 512, the generation unit 516, and the output unit 517 correspond respectively to the causal discovery unit 311, the range identification unit 313, and the output unit 314 in FIG. 3. The distance calculation unit 513, the rate-of-change calculation unit 514, and the similarity determination unit 515 correspond to the determination unit 312 in FIG. 3.

The variable range identification device 501 analyzes various data aggregates to be subjected to data analysis. For example, the data aggregate may be the aggregate of data related to the amounts of electricity consumed in a facility, such as a university campus and a shopping mall.

The data aggregate may be the aggregate of data related to attributes of an intermediate product or a final product in a process of manufacturing an industrial product. The industrial product may be an automobile, an electrical product, an industrial machine, or a chemical product, such as a medical supply. The data aggregate may be the aggregate of data related to work outcomes or satisfaction levels of workers in labor management.

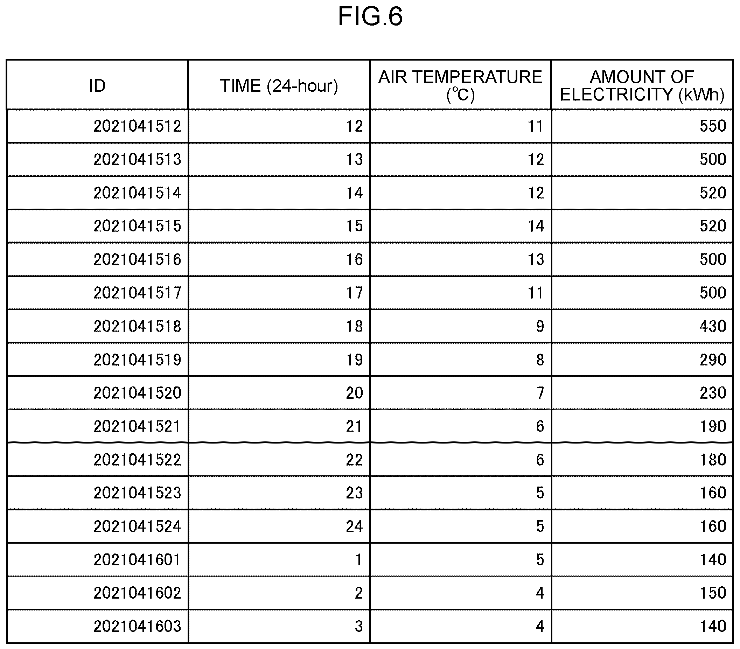

The storage unit 518 stores a data aggregate 521 to be subjected to data analysis. FIG. 6 illustrates an example of the data aggregate 521.

Each piece of data included in the data aggregate 521 in FIG. 6 is data related to the amount of electricity consumed in the facility and includes an ID, time, air temperature, and the amount of electricity. The ID is the identification information of the data. The time indicates acquired time at which the data is acquired. The air temperature indicates the measured value of air temperature at the acquired time, and the amount of electricity indicates the measured value of the amount of electricity at the acquired time. The time and the air temperature are explanatory variables, and the amount of electricity is a response variable.

The condition extraction unit 511 sets one or a plurality of thresholds for each explanatory variable included in the data aggregate 521 and generates an inequality including the explanatory variable and the set threshold. Next, the condition extraction unit 511 exhaustively combines the inequalities to generate a condition indicating each of a plurality of the combinations of the inequalities. Each of the generated conditions indicates the range of the value of each of a plurality of the explanatory variables included in the data aggregate 521.

Next, the condition extraction unit 511 extracts data satisfying each generated condition from the data aggregate 521 and generates a subset including the extracted data. Then, the condition extraction unit 511 uses the subset to extract a condition under which correlation appears among the generated conditions, generates a condition list 522 including the extracted condition, and stores the condition list 522 in the storage unit 518.

The condition extraction unit 511, for example, generates all combinations of two variables from a plurality of variables including one or a plurality of the explanatory variables included in the conditions and the response variable.

Next, the condition extraction unit 511 uses the data included in the subset to calculate a correlation coefficient CC of a first variable and a second variable included in each of the combinations. The correlation coefficient CC is calculated by the following equation using the covariance CV of the first variable and the second variable, the standard deviation SD1 of the first variable, and the standard deviation SD2 of the second variable.

$$CC = CV/(SD1 \times SD2) \tag{1}$$

Then, if the absolute value of the correlation coefficient of at least one or more of the combinations is equal to or greater than a threshold, the condition extraction unit 511 extracts that condition as a condition under which correlation appears.

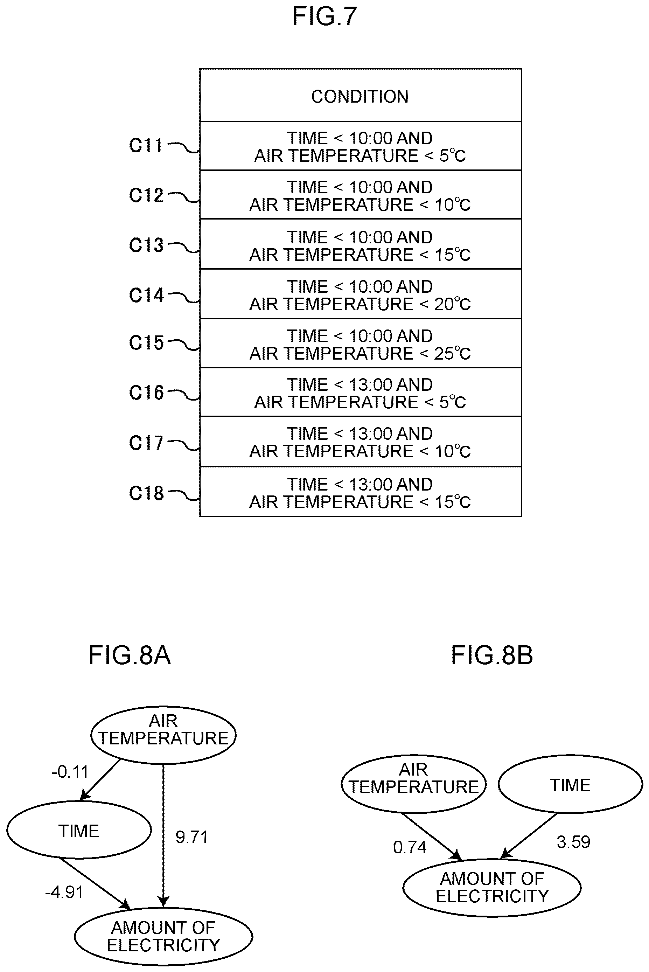

FIG. 7 illustrates an example of the condition list 522 generated from the data aggregate 521 in FIG. 6. The condition list 522 in FIG. 7 includes conditions C11 to C18. Each of the conditions indicates a combination of an inequality related to time and an inequality related to air temperature. In FIG. 7, a condition other than the conditions C11 to C18 is omitted.

For example, the condition C11 is "Time < 10:00 and Air Temperature < 5°C". The condition C11 indicates that the time range is before 10:00 and the air temperature range is below 5°C.

The range of time and air temperature satisfying the condition C12 contains the range of time and air temperature satisfying the condition C11. The range of time and air temperature satisfying the condition C13 contains the range of time and air temperature satisfying the condition C11 and contains the range of time and air temperature satisfying the condition C12.

The range of time and air temperature satisfying the condition C14 contains the range of time and air temperature satisfying the condition **C11,** contains the range of time and air temperature satisfying the condition **C12,** and contains the range of time and air temperature satisfying the condition **C13.** The range of time and air temperature satisfying the condition C15 contains the range of time and air temperature satisfying the condition **C11,** contains the range of time and air temperature satisfying the condition **C12,** contains the range of time and air temperature satisfying the condition **C13,** and contains the range of time and air temperature satisfying the condition **C14.**

The range of time and air temperature satisfying the condition C16 contains the range of time and air temperature satisfying the condition **C11.** The range of time and air temperature satisfying the condition C17 contains the range of time and air temperature satisfying the condition **C11,** contains the range of time and air temperature satisfying the condition **C12,** and contains the range of time and air temperature satisfying the condition **C16.**

The range of time and air temperature satisfying the condition C18 contains the range of time and air temperature satisfying the condition **C11,** contains the range of time and air temperature satisfying the condition C12, and contains the range of time and air temperature satisfying the condition C13. The range of time and air temperature satisfying the condition C18 further contains the range of time and air temperature satisfying the condition C16 and contains the range of time and air temperature satisfying the condition C17.

The causal discovery unit 512 extracts data satisfying each condition included in the condition list 522 from the data aggregate 521 and generates a subset including the extracted data. Then, the causal discovery unit 512 performs statistical causal discovery using the generated subset to generate a causal graph 523 for each condition and stores the causal graph 523 in the storage unit 518. As the statistical causal discovery, for example, a linear non-Gaussian acyclic model (LiNGAM) is used.

FIGS. 8A and 8B illustrate examples of the causal graphs 523 generated from the condition list 522 in FIG. 7. The causal graph 523 in FIG. 8A includes a node representing time, a node representing air temperature, a node representing the amount of electricity, an edge directed from the air temperature to the time, an edge directed from the time to the amount of electricity, and an edge directed from the air temperature to the amount of electricity.

The edge directed from the air temperature to the time is given -0.11 as a causal effect. Thus, an increase in the air temperature of 1°C decreases the time by 0.11 hours. The edge directed from the time to the amount of electricity is given -4.91 as a causal effect. Thus, an increase in the time of 1 hour decreases the amount of electricity by 4.91 kWh. The edge directed from the air temperature to the amount of electricity is given 9.71 as a causal effect. Thus, an increase in the air temperature of 1°C increase the amount of electricity by 9.71 kWh.

If the causal effect is positive, an increase in the variable value of the cause also increases the variable value of the effect. If the causal effect is negative, an increase in the variable value of the cause decreases the variable value of the effect.

The causal graph 523 in FIG. 8B includes a node representing time, a node representing air temperature, a node representing the amount of electricity, an edge directed from the air temperature to the amount of electricity, and an edge directed from the time to the amount of electricity.

The edge directed from the air temperature to the amount of electricity is given 0.74 as a causal effect. Thus, an increase in the air temperature of 1°C increases the amount of electricity by 0.74 kWh. The edge directed from the time to the amount of electricity is given 3.59 as a causal effect. Thus, an increase in the time of 1 hour increases the amount of electricity by 3.59 kWh.

Next, the causal discovery unit 512 uses any of the explanatory variables included in the condition list 522 as a factor variable to calculate a causal effect of the factor variable on the response variable from the causal graph 523. Then, the causal discovery unit 512 generates causal effect information 524 including the calculated causal effect and stores the causal effect information 524 in the storage unit 518. The causal effect information 524 includes a causal effect associated with a combination of the condition used for generating the causal graph 523 and the factor variable.

The causal discovery unit 512 calculates the product of the causal effects of one or more edges included in each path from the factor variable to the response variable in the causal graph 523, as the causal effect of that path. Then, the causal discovery unit 512 calculates the sum total of the causal effects of all the paths from the factor variable to the response variable as the causal effect of the factor variable on the response variable.

For example, in the case of the causal graph 523 in FIG. 8A, the causal effect of the air temperature on the amount of electricity is calculated as follows:

Causal effect of the path Air Temperature $\rightarrow$ Time $\rightarrow$ Amount of Electricity: $(-0.11) \times (-4.91) = 0.54$
Causal effect of the path Air Temperature $\rightarrow$ Amount of Electricity: 9.71
Causal effect of the air temperature on the amount of electricity: $0.54 + 9.71 = 10.25$

In the case of the causal graph 523 in FIG. 8B, the causal effect of the air temperature on the amount of electricity is calculated as follows:

Causal effect of the path Air Temperature $\rightarrow$ Amount of Electricity: 0.74
Causal effect of the path Time $\rightarrow$ Amount of Electricity: 3.59
Causal effect of the air temperature on the amount of electricity: $0.74 + 3.59 = 4.33$

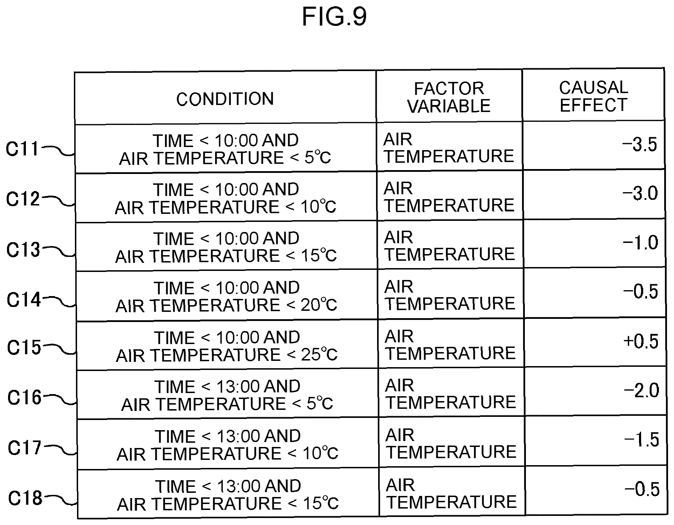

FIG. 9 illustrates an example of the causal effect information 524 generated from the condition list 522 in FIG. 7. The causal effect information 524 in FIG. 9 includes a causal effect associated with a combination of each condition and the factor variable. In this example, the factor variable is air temperature, the response variable is the amount of electricity, and the causal effect indicates a causal effect of the air temperature on the amount of electricity.

The signs of the causal effects obtained using the conditions C11 to C14 and the conditions C16 to C18 are negative, and the sign of the causal effect obtained using the condition C15 is positive. In FIG. 9, information related to a condition other than the conditions C11 to C18 is omitted.

The distance calculation unit 513 selects a combination of any condition CA and another condition CB containing the condition CA from the condition list 522. If the numerical range of the explanatory variable indicated by the condition CA is contained in the numerical range of the explanatory variable indicated by the condition CB, it is determined that the condition CB contains the condition CA.

Next, the distance calculation unit 513 calculates a distance D between the causal graph 523 generated using the condition CA and the causal graph 523 generated using the condition CB, generates distance information 525 including the distance D, and stores the distance information 525 in the storage unit 518. The distance information 525 includes the distance D associated with the combination of the condition CA and the condition CB.

The condition CA is an example of a first condition, and the condition CB is an example of a second condition. A subset generated using the condition CA is an example of a first subset, and a subset generated using the condition CB is an example of a second subset. The causal graph 523 generated using the condition CA is an example of a first causal graph representing a first causal relationship, and the causal graph 523 generated using the condition CB is an example of a second causal graph representing a second causal relationship.

The distance calculation unit 513, for example, transforms each of the causal graphs 523 into an adjacency matrix having causal effects as elements and calculates the distance between the two adjacency matrices as the distance D between the two causal graphs 523.

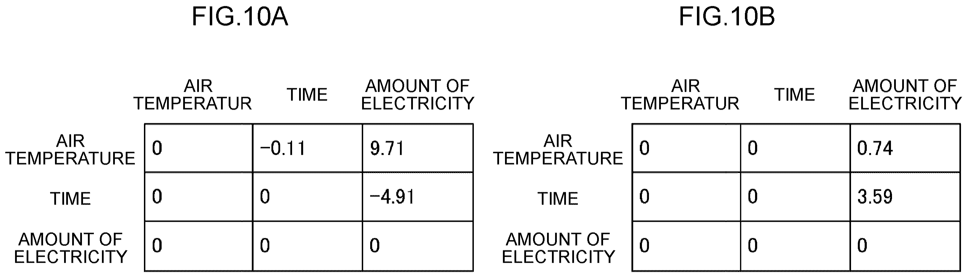

FIGS. 10A and 10B illustrate examples of the adjacency matrices. The adjacency matrix in FIG. 10A represents the causal graph 523 in FIG. 8A. Each row of the adjacency matrix corresponds to the starting node of an edge, and each column corresponds to the end node of an edge. The element, corresponding to a combination of the starting node and the end node of each edge, of the adjacency matrix is set at the causal effect of that edge, and the other elements are set at 0. Thus, the diagonal elements are set at 0.

"-0.11" corresponding to the combination of the starting node "Air Temperature" and the end node "Time" indicates the causal effect of the edge directed from the air temperature to the time. "9.71" corresponding to the combination of the starting node "Air Temperature" and the end node "Amount of Electricity" indicates the causal effect of the edge directed from the air temperature to the amount of electricity. "-4.91" corresponding to the combination of the starting node "Time" and the end node "Amount of Electricity" indicates the causal effect of the edge directed from the time to the amount of electricity.

The adjacency matrix in FIG. 10B represents the causal graph 523 in FIG. 8B. "0.74" corresponding to the combination of the starting node "Air Temperature" and the end node "Amount of Electricity" indicates the causal effect of the edge directed from the air temperature to the amount of electricity. "3.59" corresponding to the combination of the starting node "Time" and the end node "Amount of Electricity" indicates the causal effect of the edge directed from the time to the amount of electricity.

The distance D between an adjacency matrix A1 with N rows and N columns (N is an integer equal to or greater than 2) and an adjacency matrix A2 with N rows and N columns is calculated by the following equation.

$$D = (\Sigma(A1(i, j) - A2(i, j))^2)^{1/2} \qquad (2)$$

A1(i, j) represents the element in the row i and the column j in the adjacency matrix A1, and A2(i, j) represents the element in the row i and the column j in the adjacency matrix A2. $\Sigma$ represents the sum total of i = 1 to N and j = 1 to N. Thus, the distance D in the equation (2) represents the root sum square of the differences between A1(i, j) and A2(i, j).

For example, the distance D between the adjacency matrix in FIG. 10A and the adjacency matrix in FIG. 10B is calculated by the following equation using the equation (2).

$$D = ((-0.11 - 0)^2 + (9.71 - 0.74)^2 + (-4.91 - 3.59)^2)^{1/2} = 12.36 \qquad (3)$$

The rate-of-change calculation unit 514 selects a combination of any condition CA and another condition CB containing the condition CA from the condition list 522. Next, the rate-of-change calculation unit 514 acquires a causal effect EA obtained using the condition CA and a causal effect EB obtained using the condition CB from the causal effect information 524 and calculates the difference between the causal effect EA and the causal effect EB. The causal effect EA and the causal effect EB indicate causal effects of the same factor variable on the response variable.

The rate-of-change calculation unit 514 calculates the rate R of change in the causal effect from the calculated difference, generates rate-of-change information 526 including the rate R of change, and stores the rate-of-change information 526 in the storage unit 518. The rate-of-change information 526 includes the rate R of change associated with a combination of the condition CA, the condition CB, and the factor variable. The rate R of change is, for example, calculated by the following equation.

$$R = (EB - EA)/EA \qquad (4)$$

The condition CA is an example of the first condition, and the condition CB is an example of the second condition. The causal effect EA is an example of the first causal effect, and the causal effect EB is an example of the second causal effect.

For example, the condition C11 in FIG. 9 is contained in the condition C12. Thus, the rate R of change between the causal effect of the condition C11 and the causal effect of the condition C12 is calculated by the following equation using the equation (4).

$$R = (-3.0 - (-3.5))/(-3.5) = -0.14 \qquad (5)$$

The condition C12 in FIG. 9 is contained in the condition C13. Thus, the rate R of change between the causal effect of the condition C12 and the causal effect of the condition C13 is calculated by the following equation using the equation (4).

$$R = (-1.0 - (-3.0))/(-3.0) = -0.67 \qquad (6)$$

The condition C12 in FIG. 9 is contained in the condition C17. Thus, the rate R of change between the causal effect of the condition C12 and the causal effect of the condition C17 is calculated by the following equation using the equation (4).

$$R = (-1.5 - (-3.0))/(-3.0) = -0.50 \qquad (7)$$

The similarity determination unit 515 selects a combination of any condition CA and another condition CB containing the condition CA from the condition list 522.

Next, the similarity determination unit 515 uses the causal effect information 524, the distance information 525, and the rate-of-change information 526 to determine similarity between the causal effect EA obtained using the condition CA and the causal effect EB obtained using the condition CB. The causal effect EA and the causal effect EB indicate causal effects of the same factor variable on the response variable. Then, the similarity determination unit 515 generates a determination result 527 of the similarity between the causal effect EA and the causal effect EB and stores the determination result 527 in the storage unit 518.

The determination result 527 includes determination information associated with the combination of the condition CA, the condition CB, and the factor variable. The determination information indicates whether the causal effect EA is similar to the causal effect EB. The similarity determination unit 515 may use the causal effect information 524 and either one of the distance information 525 and the rate-of-change information 526 to determine the similarity between the causal effect EA and the causal effect EB.

The similarity determination unit 515 determines the similarity between the causal effect EA and the causal effect EB, for example, by any determination method among a determination method M1 using the distance information 525, a determination method M2 using the rate-of-change information 526, and a determination method M3 using the distance information 525 and the rate-of-change information 526.

If the determination method M1 is used, the similarity determination unit 515 acquires the causal effect EA obtained using the condition CA and the causal effect EB obtained using the condition CB from the causal effect information 524 and compares the signs of the causal effect EA and the causal effect EB. Then, the similarity determination unit 515 acquires the distance D between the causal graph 523 generated using the condition CA and the causal graph 523 generated using the condition CB from the distance information 525.

If the distance D is less than a threshold T1, the similarity determination unit 515 determines that the causal graph 523 generated using the condition CA is similar to the causal graph 523 generated using the condition CB. In this case, it is determined that the subset generated using the condition CA is similar to the subset generated using the condition CB.

By comparing the distance D between the two causal graphs 523 with the threshold T1, the similarity between the subset generated using the condition CA and the subset generated using the condition CB can readily be determined.

Assume that the sign of the causal effect EA is the same as the sign of the causal effect EB and that the subset generated using the condition CA is similar to the subset generated using the condition CB. In this case, the similarity determination unit 515 determines that the causal effect EA is similar to the causal effect EB. In other cases, the similarity determination unit 515 determines that the causal effect EA is not similar to the causal effect EB.

With the determination method M1, the similarity between the causal effect EA and the causal effect EB can be determined with high accuracy on the basis of the similarity between the subset generated using the condition CA and the subset generated using the condition CB.

If the determination method M2 is used, the similarity determination unit 515 acquires the causal effect EA obtained using the condition CA and the causal effect EB obtained using the condition CB from the causal effect information 524 and compares the signs of the causal effect EA and the causal effect EB. Then, the similarity determination unit 515 acquires the rate R of change between the causal effect EA and the causal effect EB from the rate-of-change information 526.

If the sign of the causal effect EA is the same as the sign of the causal effect EB and if the absolute value of the rate R of change is less than a threshold T2, the similarity determination unit 515 determines that the causal effect EA is similar to the causal effect EB. In other cases, the similarity determination unit 515 determines that the causal effect EA is not similar to the causal effect EB.

For example, if the condition C11 in FIG. 9 is selected as the condition CA and if the condition C12 is selected as the condition CB, the causal effect EA is -3.5, and the causal effect EB is -3.0. The causal effect EA and the causal effect EB have the same sign. The rate R of change is calculated by the equation (5) and is -0.14. When T2 = 0.2, the absolute value of the rate R of change < T2, so that it is determined that the causal effect EA obtained using the condition C11 is similar to the causal effect EB obtained using the condition C12.

If the condition C12 in FIG. 9 is selected as the condition CA and if the condition C13 is selected as the condition CB, the causal effect EA is -3.0, and the causal effect EB is -1.0. The causal effect EA and the causal effect EB have the same **sign.** The rate R of change is calculated by the equation (6) and is **-0.67.** When T2 = **0.2,** the absolute value of the rate R of change > **T2,** so that it is determined that the causal effect EA obtained using the condition C12 is not similar to the causal effect EB obtained using the condition **C13.**

If the condition C12 in **FIG.** 9 is selected as the condition CA and if the condition C17 is selected as the condition CB, the causal effect EA is -3.0, and the causal effect EB is -1.5. The causal effect EA and the causal effect EB have the same **sign.** The rate R of change is calculated by the equation (7) and is -0.50. When T2 = **0.2,** the absolute value of the rate R of change > **T2,** so that it is determined that the causal effect EA obtained using the condition C12 is not similar to the causal effect EB obtained using the condition C17.

With the determination method **M2,** the similarity between the causal effect EA and the causal effect EB can be determined with high accuracy on the basis of the difference between the causal effect EA obtained using the condition CA and the causal effect EB obtained using the condition CB.

If the determination method M3 is used, the similarity determination unit 515 acquires the causal effect EA obtained using the condition CA and the causal effect EB obtained using the condition CB from the causal effect information 524 and compares the signs of the causal effect EA and the causal effect EB. Then, the similarity determination unit 515 acquires the distance D between the causal graph 523 generated using the condition CA and the causal graph 523 generated using the condition CB from the distance information 525 and acquires the rate R of change between the causal effect EA and the causal effect EB from the rate-of-change information 526.

If the distance D is less than the threshold T1, the similarity determination unit 515 determines that the causal graph 523 generated using the condition CA is similar to the causal graph 523 generated using the condition CB. In this case, it is determined that the subset generated using the condition CA is similar to the subset generated using the condition CB.

Assume that the sign of the causal effect EA is the same as the sign of the causal effect EB and that the subset generated using the condition CA is similar to the subset generated using the condition CB. In this case, the similarity determination unit 515 determines that the causal effect EA is similar to the causal effect EB.

Next, assume that the sign of the causal effect EA is the same as the sign of the causal effect EB and that the subset generated using the condition CA is not similar to the subset generated using the condition CB. In this case, the similarity determination unit 515 compares the absolute value of the rate R of change with the threshold T2, and, if the absolute value of the rate R of change is less than the threshold T2, determines that the causal effect EA is similar to the causal effect EB.

In other cases, the similarity determination unit 515 determines that the causal effect EA is not similar to the causal effect EB.

With the determination method M3, by using both the determination method M1 and the determination method M2, the probability of such determination that the causal effect EA is similar to the causal effect EB can be increased.

The generation unit 516 uses the determination result 527 to identify the numerical range of an explanatory variable in which causal effects having the same sign are yielded as causal effects of a specific factor variable on the response variable. Then, the generation unit 516 generates range information 528 indicating the identified numerical range and stores the range information 528 in the storage unit 518. The output unit 517 outputs the range information 528 stored in the storage unit 518. The numerical range indicated by the range information 528 is an example of the identified range of the value of each explanatory variable.

The generation unit 516, for example, selects any condition CX from the condition list 522. Then, the generation unit 516 selects any explanatory variable included in the condition CX as an explanatory variable V and selects an unselected condition closest to the condition CX with respect to the explanatory variable V as a condition CY. The unselected condition closest to the condition CX with respect to the explanatory variable V is a condition indicating the narrowest numerical range of the explanatory variable V among the other unselected conditions containing the condition CX.

Next, the generation unit 516 acquires determination information associated with a combination of the condition CX, the condition CY, and the specific factor variable from the determination result 527 and checks whether the causal effect obtained using the condition CX is similar to the causal effect obtained using the condition CY.

If the two causal effects are similar to each other, the generation unit 516 identifies the numerical range of the explanatory variable indicated by the condition CY as the numerical range of the explanatory variable in which causal effects having the same sign are yielded. If the two causal effects are not similar to each other, the generation unit 516 identifies the numerical range of the explanatory variable indicated by the condition CX as the numerical range of the explanatory variable in which causal effects having the same sign are yielded. The condition CX is an example of the first condition, and the condition CY is an example of the second condition.

For example, if the condition C11 in FIG. 7 is selected as the condition CX and if the air temperature is selected as the explanatory variable V, the unselected conditions containing the condition CX are the conditions C12 to C18. The condition indicating the narrowest numerical range of the explanatory variable V among the conditions C12 to C18 is the condition C16. Thus, the condition C16 is selected as the condition CY.

If the condition C16 is selected as the condition CY and if the causal effect obtained using the condition CX is not similar to the causal effect obtained using the condition CY, the unselected condition closest to the condition CX with respect to the explanatory variable V is selected as a new condition CY.

In this case, the unselected conditions containing the condition CX are the conditions C12 to C15, the condition C17, and the condition C18. The conditions indicating the narrowest numerical range of the explanatory variable V among the conditions C12 to C15, the condition C17, and the condition C18 are the condition C12 and the condition C17. Thus, the condition C12 or the condition C17 is selected as a new condition CY.

As an example, assume that the condition C12 is selected as a new condition CY and that the causal effect obtained using the condition CX is similar to the causal effect obtained using the condition CY. In this case, the numerical range of the explanatory variable indicated by the condition C12 is identified as the numerical range of the explanatory variable in which causal effects having the same sign are yielded. Then, the generation unit 516 uses the condition CY as a new condition CX and repeats the same processing until there are no more unselected conditions containing the condition CX.

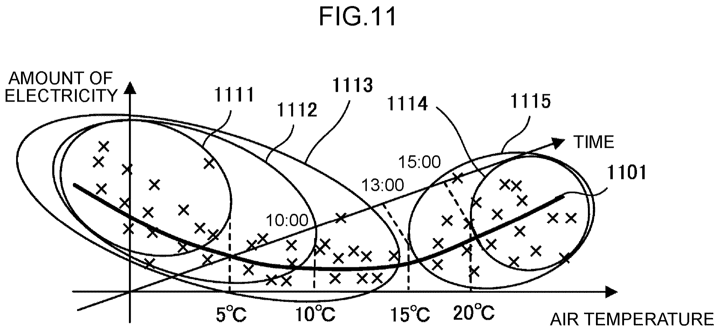

FIG. 11 illustrates an example of the numerical ranges of the explanatory variables in which causal effects having the same signs are yielded. Symbols "×" indicate points in a three-dimensional space in which the time, the air temperature, and the amounts of electricity are plotted. The air temperature and the amount of electricity indicated by "×" are measured values at the time indicated by the same "×". A curve 1101 represents an approximate curve with which the distribution of a plurality of the symbols "×" is approximated.

A range 1111 corresponds to the numerical ranges of the explanatory variables indicated by the condition C11 in FIG. 9, a range 1112 corresponds to the numerical ranges of the explanatory variables indicated by the condition C12, and a range 1113 corresponds to the numerical ranges of the explanatory variables indicated by the condition C13. A range 1114 corresponds to the numerical ranges of the explanatory variables indicated by a condition "Time > 15:00 and Air Temperature > 20°C", and a range 1115 corresponds to the numerical ranges of the explanatory variables indicated by a condition "Time > 13:00 and Air Temperature > 15°C". In FIG. 9, information related to these two conditions is omitted.

In the example in FIG. 11, the causal effect obtained using the condition C11 is similar to the causal effect obtained using the condition C12, and the signs of these causal effects are negative. However, the causal effect obtained using the condition C12 is not similar to the causal effect obtained using the condition C13, and the causal effect obtained using the condition C12 is not similar to the causal effect obtained using the condition C17 either. Thus, the range 1112 containing the range 1111 is identified as the numerical range in which negative causal effects are yielded.

Furthermore, in the example in FIG. 11, the causal effect obtained using the condition "Time > 15:00 and Air Temperature > 20°C" is similar to the causal effect obtained using the condition "Time > 13:00 and Air Temperature > 15°C", and the signs of these causal effects are positive. Thus, the range 1115 containing the range 1114 is identified as the numerical range in which positive causal effects are yielded.

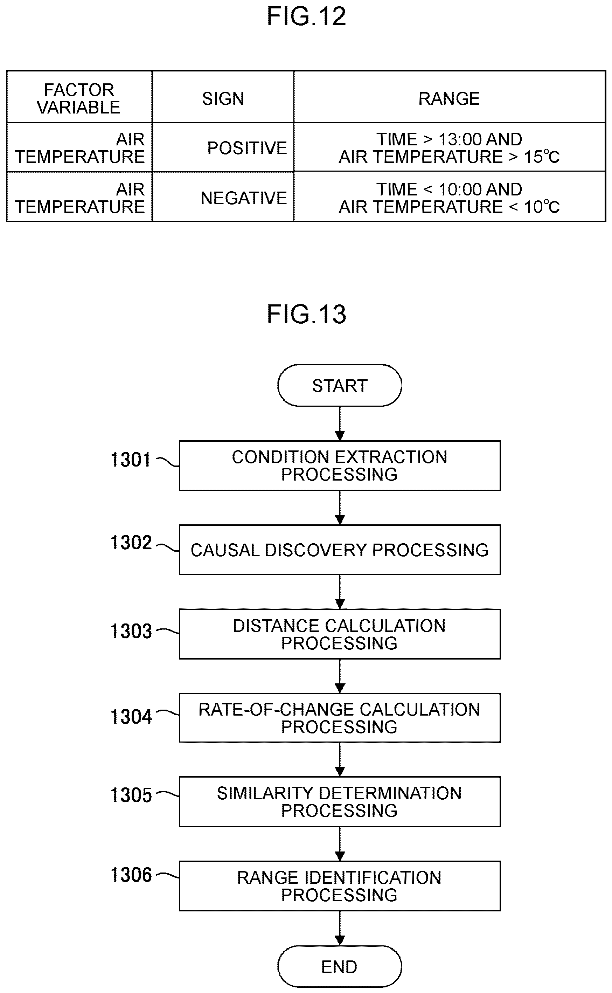

FIG. 12 illustrated an example of the range information 528. The range information 528 in FIG. 12 includes factor variables, signs, and ranges. In this example, the factor variables are air temperature. The signs indicate the signs of causal effects, and the ranges indicate numerical ranges in which causal effects having the same sign are yielded. The numerical range in which positive causal effects are yielded is "Time > 13:00 and Air Temperature > 15°C", and the numerical range in which negative causal effects are yielded is "Time < 10:00 and Air Temperature < 10°C". The positive or negative sign is an example of the predetermined sign.

The output unit 517 may display the numerical range indicated by the range information 528 as an area in the three-dimensional space as illustrated in FIG. 11, on a screen.

With the variable range identification device 501 in FIG. **5,** any condition CA and another condition CB containing the condition CA are selected from the conditions included in the condition list 522, and the similarity between the causal effect obtained using the condition CA and the causal effect obtained using the condition CB is determined.

If the two causal effects are not similar to each other, the numerical range of the explanatory variable indicated by the condition CB is not employed as the numerical range in which causal effects having the same sign are yielded, and the numerical range of the explanatory variable indicated by the condition CA is employed as the numerical range in which causal effects having the same sign are yielded. With this, the numerical range in which causal effects having the same sign are yielded can be obtained with high accuracy.

For example, if the data as in FIG. 2 is included in the data aggregate 521, the range 212 is not employed as the numerical range in which negative causal effects are yielded, and the range 211 being the actual maximum range is employed as the numerical range in which negative causal effects are yielded.

FIG. 13 is a flowchart illustrating example variable range identification processing performed by the variable range identification device 501 in FIG. 5. First, the condition extraction unit 511 performs condition extraction processing (Step 1301), and the causal discovery unit 512 performs causal discovery processing (Step 1302).

Next, the distance calculation unit 513 performs distance calculation processing (Step 1303), the rate-of-change calculation unit 514 performs rate-of-change calculation processing (Step 1304), and the similarity determination unit 515 performs similarity determination processing (Step 1305). Then, the generation unit 516 performs range identification processing (Step 1306).

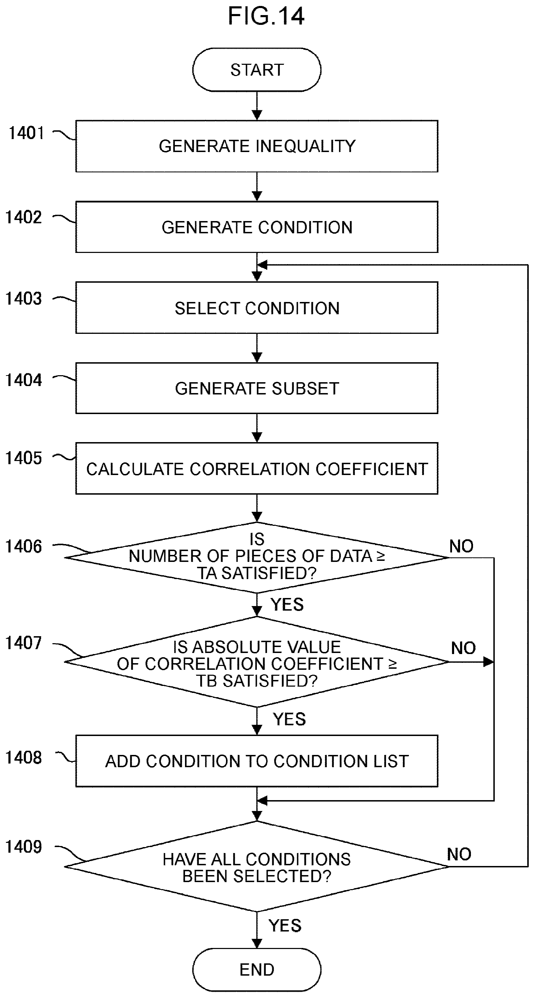

FIG. 14 is a flowchart illustrating an example of the condition extraction processing at Step 1301 in FIG. 13. First, the condition extraction unit 511 sets one or a plurality of thresholds for each explanatory variable included in the data aggregate 521 and generates an inequality including the explanatory variable and the set threshold (Step 1401). Then, the condition extraction unit 511 exhaustively combines the generated inequalities to generate a condition indicating each of a plurality of the combinations of the inequalities (Step 1402).

Next, the condition extraction unit 511 selects one condition among a plurality of the generated conditions (Step 1403). Then, the condition extraction unit 511 extracts data satisfying the selected condition from the data aggregate 521 and generates a subset including the extracted data (Step 1404).

Next, the condition extraction unit 511 generates all combinations of two variables from a plurality of variables including one or a plurality of the explanatory variables included in the selected condition and the response variable. Then, the condition extraction unit 511 uses the data included in the generated subset to calculate a correlation coefficient of the two variables included in each combination (Step 1405).

Next, the condition extraction unit 511 compares the number of pieces of the data included in the subset with a threshold TA (Step 1406). If the number of pieces of the data is equal to or greater than the threshold TA (YES at Step 1406), the condition extraction unit 511 compares the absolute value of the correlation coefficient calculated for each combination with a threshold TB (Step 1407).

If the absolute value of one or more correlation coefficients is equal to or greater than the threshold TB (YES at Step 1407), the condition extraction unit 511 extracts the selected condition as a condition under which correlation appears and adds the condition to the condition list 522 (Step 1408).

Next, the condition extraction unit 511 checks whether all the conditions have been selected (Step 1409). If an unselected condition remains (NO at Step 1409), the condition extraction unit 511 repeats the processes at Step 1403 and afterward for a next condition.

If the number of pieces of the data is less than the threshold TA (NO at Step 1406) or if the absolute values of all the correlation coefficients are less than the threshold TB (NO at Step 1407), the condition extraction unit 511 performs the processes at Step 1409 and afterward. If all the conditions have been selected (YES at Step 1409), the condition extraction unit 511 ends the processing.

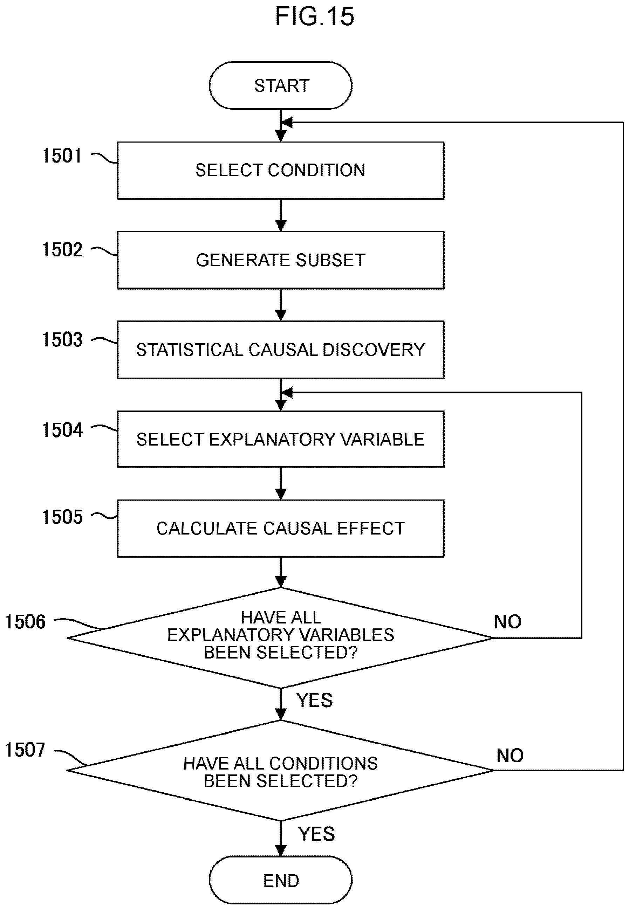

FIG. 15 is a flowchart illustrating an example of the causal discovery processing at Step 1302 in FIG. 13. First, the causal discovery unit 512 selects one condition from the condition list 522 (Step 1501). Next, the causal discovery unit 512 extracts data satisfying the selected condition from the data aggregate 521 and generates a subset including the extracted data (Step 1502). Then, the causal discovery unit 512 performs statistical causal discovery using the generated subset to generate a causal graph 523 (Step 1503).

Next, the causal discovery unit 512 selects any explanatory variable included in the condition list 522 as a factor variable (Step 1504). Then, the causal discovery unit 512 calculates a causal effect of the factor variable on the response variable from the generated causal graph 523, associates the condition, the factor variable, and the causal effect with each other, and adds them to the causal effect information 524 (Step 1505).

Next, the causal discovery unit 512 checks whether all the explanatory variables have been selected (Step 1506). If an unselected explanatory variable remains (NO at Step 1506), the causal discovery unit 512 repeats the processes at Step 1504 and afterward for a next explanatory variable.

If all the explanatory variables have been selected (YES at Step 1506), the causal discovery unit 512 checks whether all the conditions have been selected (Step 1507). If an unselected condition remains (NO at Step 1507), the causal discovery unit 512 repeats the processes at Step 1501 and afterward for a next condition. If all the conditions have been selected (YES at Step 1507), the causal discovery unit 512 ends the processing.

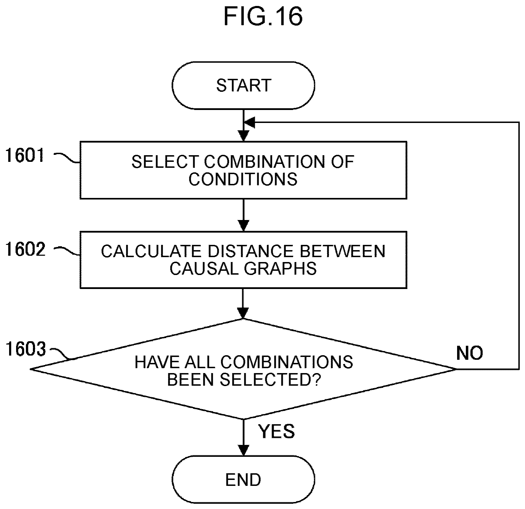

FIG. 16 is a flowchart illustrating an example of the distance calculation processing at Step 1303 in FIG. 13. First, the distance calculation unit 513 selects a combination of any condition CA and another condition CB containing the condition CA from the condition list 522 (Step 1601).

Next, the distance calculation unit 513 calculates a distance D between the causal graph 523 generated using the condition CA and the causal graph 523 generated using the condition CB, associates the condition CA, the condition CB, and the distance D with each other, and adds them to the distance information 525 (Step 1602).

Next, the distance calculation unit 513 checks whether all the combinations of the condition CA and the condition CB have been selected (Step 1603). If an unselected combination remains (NO at Step 1603), the distance calculation unit 513 repeats the processes at Step 1601 and afterward for a next combination. If all the combinations have been selected (YES at Step 1603), the distance calculation unit 513 ends the processing.

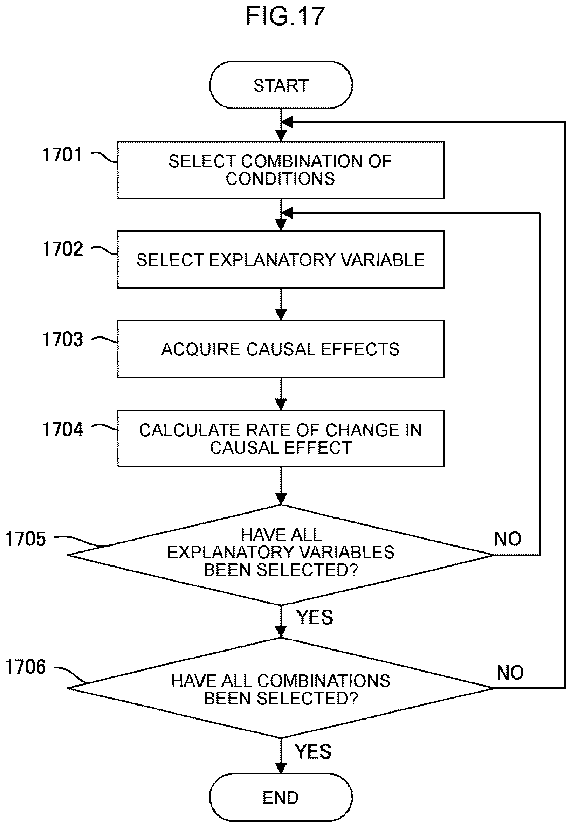

FIG. 17 is a flowchart illustrating an example of the rate-of-change calculation processing at Step 1304 in FIG. 13. First, the rate-of-change calculation unit 514 selects a combination of any condition CA and another condition CB containing the condition CA from the condition list 522 (Step 1701). Next, the rate-of-change calculation unit 514 selects any explanatory variable included in the condition list 522 as a factor variable (Step 1702).

Next, the rate-of-change calculation unit 514 acquires the causal effect EA associated with the condition CA and the factor variable and the causal effect EB associated with the condition CB and the factor variable from the causal effect information 524 (Step 1703). Then, the rate-of-change calculation unit 514 uses the causal effect EA and the causal effect EB to calculate the rate R of change in the causal effect, associates the condition CA, the condition CB, the factor variable, and the rate R of change, and adds them to the rate-of-change information 526 (Step 1704).

Next, the rate-of-change calculation unit 514 checks whether all the explanatory variables have been selected (Step 1705). If an unselected explanatory variable remains (NO at Step 1705), the rate-of-change calculation unit 514 repeats the processes at Step 1702 and afterward for a next explanatory variable.

If all the explanatory variables have been selected (YES at Step 1705), the rate-of-change calculation unit 514 checks whether all the combinations of the condition CA and the condition CB have been selected (Step 1706). If an unselected combination remains (NO at Step 1706), the rate-of-change calculation unit 514 repeats the processes at Step 1701 and afterward for a next combination. If all the combinations have been selected (YES at Step 1706), the rate-of-change calculation unit 514 ends the processing.

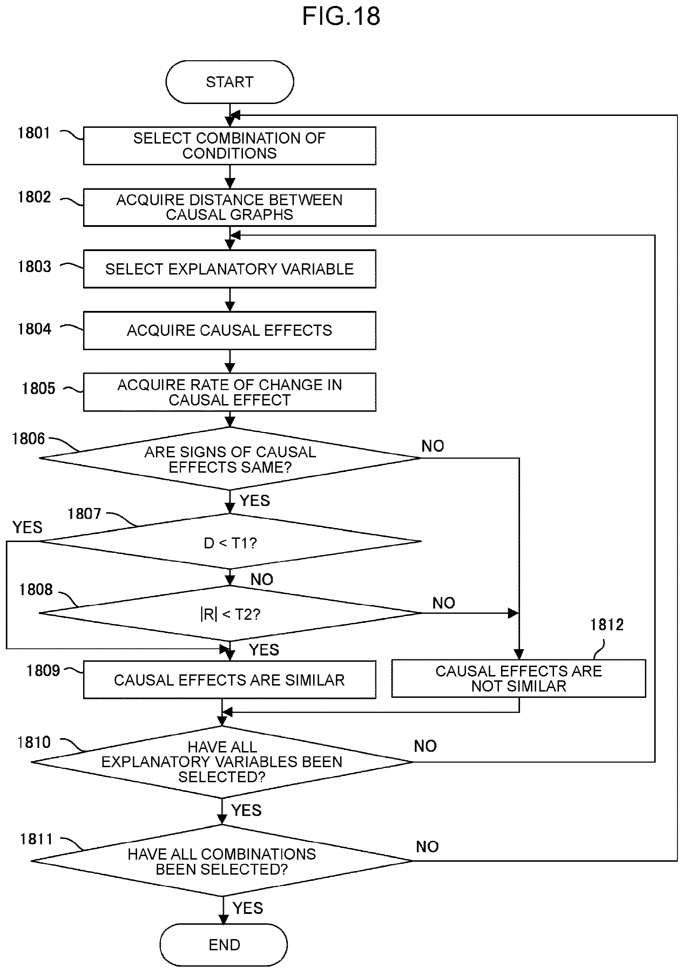

FIG. 18 is a flowchart illustrating an example of the similarity determination processing at Step 1305 in FIG. 13. In the similarity determination processing in FIG. 18, the determination method M3 is used.

First, the similarity determination unit 515 selects a combination of any condition CA and another condition CB containing the condition CA from the condition list 522 (Step 1801). Then, the similarity determination unit 515 acquires the distance D associated with the condition CA and the condition CB from the distance information 525 (Step 1802).

Next, the similarity determination unit 515 selects any explanatory variable included in the condition list 522 as a factor variable (Step 1803). Next, the similarity determination unit 515 acquires the causal effect EA associated with the condition CA and the factor variable and the causal effect EB associated with the condition CB and the factor variable from the causal effect information 524 (Step 1804). Then, the similarity determination unit 515 acquires the rate R of change associated with the condition CA, the condition CB, and the factor variable from the rate-of-change information 526 (Step 1805).

Next, the similarity determination unit 515 compares the sign of the causal effect EA with the sign of the causal effect EB (Step 1806). If the sign of the causal effect EA is the same as the sign of the causal effect EB (YES at Step 1806), the similarity determination unit 515 compares the distance D with the threshold T1 (Step 1807).

If the distance D is less than the threshold T1 (YES at Step 1807), the similarity determination unit 515 determines that the causal effect EA is similar to the causal effect EB. Then, the similarity determination unit 515 associates the condition CA, the condition CB, the factor variable, and the determination information indicating that the causal effect EA is similar to the causal effect EB with each other, and adds them to the determination result 527 (Step 1809).

If the distance D is equal to or greater than the threshold T1 (NO at Step 1807), the similarity determination unit 515 compares the absolute value of the rate R of change with the threshold T2 (Step 1808). If the absolute value of the rate R of change is less than the threshold T2 (YES at Step 1808), the similarity determination unit 515 determines that the causal effect EA is similar to the causal effect EB. Then, the similarity determination unit 515 associates the condition CA, the condition CB, the factor variable, and the determination information indicating that the causal effect EA is similar to the causal effect EB with each other, and adds them to the determination result 527 (Step 1809).

If the sign of the causal effect EA differs from the sign of the causal effect EB (NO at Step 1806), the similarity determination unit 515 determines that the causal effect EA is not similar to the causal effect EB. Then, the similarity determination unit 515 associates the condition CA, the condition CB, the factor variable, and the determination information indicating that the causal effect EA is not similar to the causal effect EB with each other, and adds them to the determination result 527 (Step 1812).

If the absolute value of the rate R of change is equal to or greater than the threshold T2 (NO at Step 1808), the similarity determination unit 515 determines that the causal effect EA is not similar to the causal effect EB. Then, the similarity determination unit 515 associates the condition CA, the condition CB, the factor variable, and the determination information indicating that the causal effect EA is not similar to the causal effect EB with each other, and adds them to the determination result 527 (Step 1812).

Next, the similarity determination unit 515 checks whether all the explanatory variables have been selected (Step 1810). If an unselected explanatory variable remains (NO at Step 1810), the similarity determination unit 515 repeats the processes at Step 1803 and afterward for a next explanatory variable.

If all the explanatory variables have been selected (YES at Step 1810), the similarity determination unit 515 checks whether all the combinations of the condition CA and the condition CB have been selected (Step 1811). If an unselected combination remains (NO at Step 1811), the similarity determination unit 515 repeats the processes at Step 1801 and afterward for a next combination. If all the combinations have been selected (YES at Step 1811), the similarity determination unit 515 ends the processing.

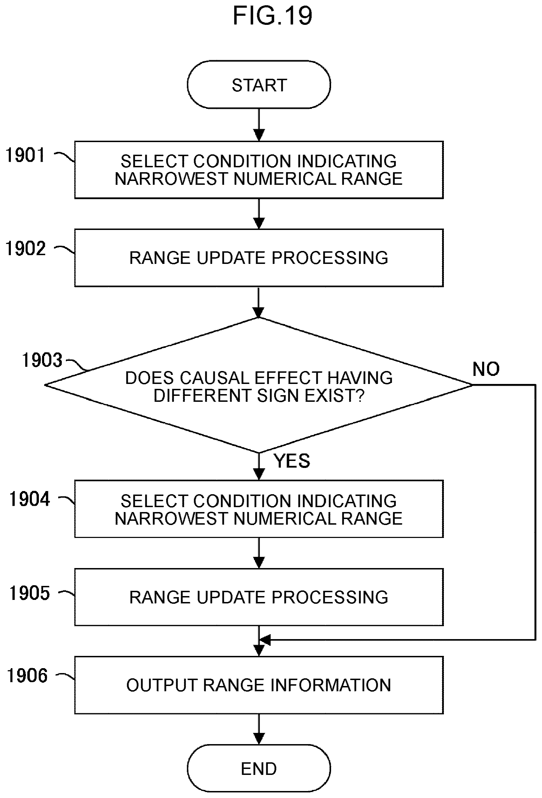

FIG. 19 is a flowchart illustrating an example of the range identification processing at Step 1306 in FIG. 13. First, the generation unit 516 selects a condition indicating the narrowest numerical range as the numerical range of an explanatory variable from the condition list 522 (Step 1901). Then, the generation unit 516 performs range update processing of updating the numerical range indicated by the selected condition to generate the range information 528 related to a specific factor variable (Step 1902).

Next, the generation unit 516 refers to the causal effect information 524 to obtain the sign of the causal effect associated with a combination of the condition selected at Step 1901 and the specific factor variable. Then, the generation unit 516 checks whether a causal effect having a sign differing from the obtained sign exists in the causal effects associated with the specific factor variable in the causal effect information 524 (Step 1903).

If a causal effect having a different sign exists (YES at Step 1903), the generation unit 516 selects a condition indicating the narrowest numerical range among the conditions associated with the causal effects having a different sign from the condition list 522 (Step 1904). Then, the generation unit 516 performs the range update processing of updating the numerical range indicated by the selected condition to update the range information 528 (Step 1905) and outputs the range information 528 (Step 1906).

If no causal effect having a different sign exists (NO at Step 1903), the generation unit 516 performs the process at Step 1906.

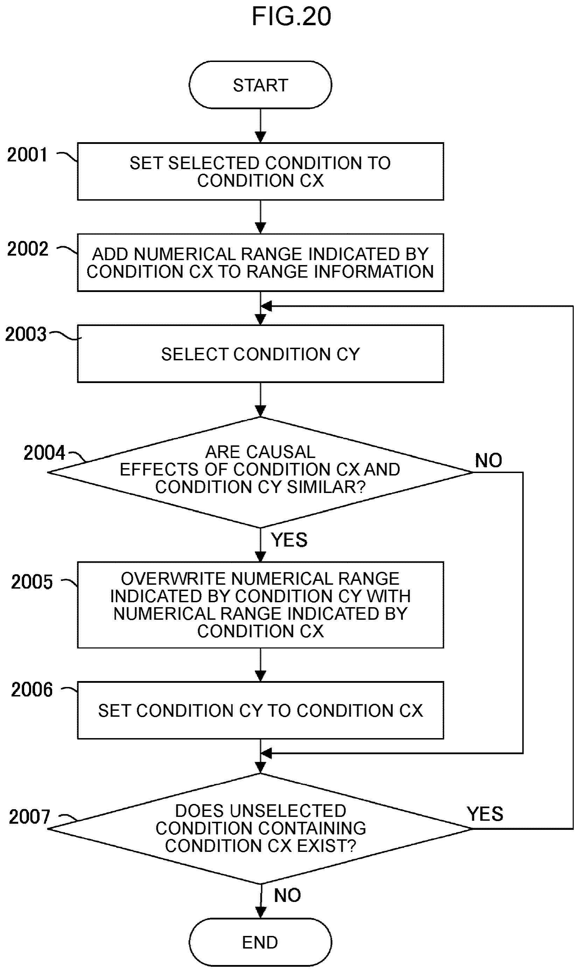

FIG. 20 is a flowchart illustrating an example of the range update processing at Steps 1902 and 1905 in FIG. 19. First, the generation unit 516 sets the condition selected from the condition list 522 to the condition CX (Step 2001). Then, the generation unit 516 adds the numerical range of an explanatory variable indicated by the condition CX as the numerical range in which causal effects having the same sign are yielded with respect to the specific factor variable, to the range information 528 (Step 2002).

Next, the generation unit 516 selects any explanatory variable included in the condition CX as the explanatory variable V and selects an unselected condition closest to the condition CX with respect to the explanatory variable V as the condition CY (Step 2003).

Next, the generation unit 516 acquires the determination information associated with the combination of the condition CX, the condition CY, and the specific factor variable from the determination result 527. Then, the generation unit 516 checks whether the acquired determination information indicates that the causal effect obtained using the condition CX is similar to the causal effect obtained using the condition CY (Step 2004).

If the causal effect obtained using the condition CX is similar to the causal effect obtained using the condition CY (YES at Step 2004), the generation unit 516 performs the process at Step 2005. At Step 2005, the generation unit 516 overwrites the numerical range of the explanatory variable indicated by the condition CY with the numerical range of the explanatory variable indicated by the condition CX to update the range information 528 (Step 2005). Then, the generation unit 516 sets the condition CY to the condition CX to update the condition CX (Step 2006).

Next, the generation unit 516 checks whether an unselected condition containing the condition CX exists (Step 2007). If an unselected condition containing the condition CX exists (YES at Step 2007), the generation unit 516 repeats the processes at Step 2003 and afterward.

If the causal effect obtained using the condition CX is not similar to the causal effect obtained using the condition CY (NO at Step 2004), the generation unit 516 performs the processes at Step 2007 and afterward. If no unselected condition containing the condition CX exists (NO at Step 2007), the generation unit 516 ends the processing.

The configuration of the information processing device 301 in FIG. 3 is merely an example, and part of the constituents may be omitted or changed in accordance with the application or condition of the information processing device 301.

The configuration of the variable range identification device 501 in FIG. 5 is merely an example, and part of the constituents may be omitted or changed in accordance with the application or condition of the variable range identification device 501. For example, if the determination method M1 is used, the rate-of-change calculation unit 514 can be omitted, and if the determination method M2 is used, the distance calculation unit 513 can be omitted.

The flowcharts in FIG. 4 and FIGS. 13 to 20 are merely examples, and part of the processes may be omitted or changed in accordance with the configuration or condition of the information processing device 301 and the variable range identification device 501. For example, if the determination method M1 is used, Step 1304 in FIG. 13 and Step 1808 in FIG. 18 can be omitted, and if the determination method M2 is used, Step 1303 in FIG. 13 and Step 1807 in FIG. 18 can be omitted.

The conditions illustrated in FIGS. 1 and 7 are merely examples, and conditions generated change depending on the data aggregate 521. The numerical ranges of the explanatory variables illustrated in FIGS. 2 and 11 are merely examples, and the numerical ranges of the explanatory variables change depending on the conditions generated from the data aggregate 521.

The data aggregate 521 illustrated in FIG. 6 is merely an example, and the data aggregate 521 changes depending on the application of the variable range identification device 501. The causal graphs 523 illustrated in FIGS. 8A and 8B, the causal effect information 524 illustrated in FIG. 9, and the adjacency matrices illustrated in FIGS. 10A and 10B are merely examples, and the causal graphs 523, the causal effect information 524, and the adjacency matrices change depending on the conditions generated from the data aggregate 521. The range information 528 illustrated in FIG. 12 is merely an example, and the range information 528 changes depending on the causal graphs 523 and the causal effect information 524.

The equations (1) to (7) are merely examples, and the variable range identification device 501 may perform the variable range identification processing using other mathematical expressions.

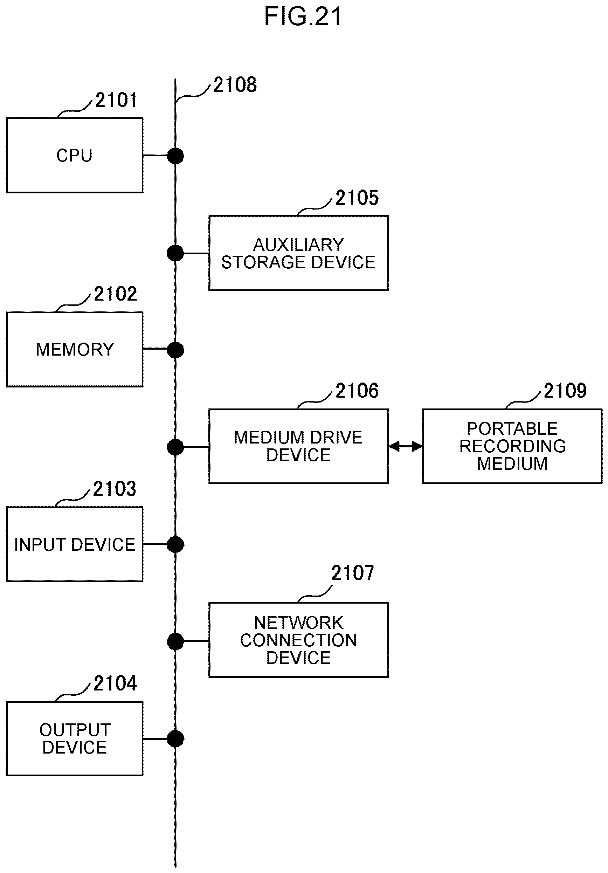

FIG. 21 illustrates an example hardware configuration of an information processing device used as the information processing device 301 in FIG. 3 and the variable range identification device 501 in FIG. 5. The information processing device in FIG. 21 includes a central processing unit (CPU) 2101, a memory 2102, an input device 2103, an output device 2104, an auxiliary storage device 2105, a medium drive device 2106, and a network connection device 2107. These constituents are hardware and are connected to each other with a bus 2108.

The memory 2102 is, for example, a semiconductor memory, such as a read only memory (ROM) and a random access memory (RAM), and stores therein a computer program and data used for processing. The memory 2102 may operate as the storage unit 518 in FIG. 5.

The CPU 2101 (processor), for example, operates as the causal discovery unit 311, the determination unit 312, and the range identification unit 313 in FIG. 3 by executing the computer program using the memory 2102. The CPU 2101 also operates as the condition extraction unit 511, the causal discovery unit 512, the distance calculation unit 513, the rate-of-change calculation unit 514, the similarity determination unit 515, and the generation unit 516 in FIG. 5 by executing the computer program using the memory 2102.

The input device 2103 is, for example, a keyboard, a pointing device, or the like and is used to input an instruction or information from a user or an operator. The output device 2104 is, for example, a display device, a printer, or the like and is used to output an inquiry or an instruction to the user or the operator or a processing result. The output device 2104 may operate as the output unit 314 in FIG. 3 or the output unit 517 in FIG. 5. The processing result may be the range information 528.

The auxiliary storage device 2105 is, for example, a magnetic disk device, an optical disk device, a magneto-optical disk device, a tape device, or the like. The auxiliary storage device 2105 may be a hard disk drive or a solid state drive (SSD). The information processing device can store the computer program and the data in the auxiliary storage device 2105 and load them into the memory 2102 for use. The auxiliary storage device 2105 may operate as the storage unit 518 in FIG. 5.

The medium drive device 2106 drives a portable recording medium 2109 to access its recorded content. The portable recording medium 2109 is a memory device, a flexible disk, an optical disk, a magneto-optical disk, or the like. The portable recording medium 2109 may be a compact disc read only memory (CD-ROM), a digital versatile disc (DVD), a universal serial bus (USB) memory, or the like. The user or the operator can store the computer program and the data in the portable recording medium 2109 and load them into the memory 2102 for use.

Thus, a computer-readable recording medium storing therein the computer program and the data used for processing is a physical (non-transitory) recording medium, such as the memory 2102, the auxiliary storage device 2105, or the portable recording medium 2109.

The network connection device 2107 is a communication device connected to a communication network, such as a wide area network (WAN) and a local area network (LAN), and performing data conversion involved in communication. The information processing device can receive the computer program and the data from an external device via the network connection device 2107 and load them into the memory 2102 for use. The network connection device 2107 may operate as the output unit 314 in FIG. 3 or the output unit 517 in FIG. 5.

Note that the information processing device do not need to include all the constituents in FIG. 21, and part of the constituents may be omitted or changed in accordance with the application or condition of the information processing device. For example, if no user or operator interface is needed, the input device 2103 and the output device 2104 can be omitted. If the portable recording medium 2109 or the communication network is not used, the medium drive device 2106 or the network connection device 2107 can be omitted.

Although the embodiment of the disclosure and its advantage have been described in detail, those skilled in the art could make various changes, additions, and omissions without departing from the scope of the present invention clearly described in the claims.

According to one aspect, the range of a variable in which causal effects having a predetermined sign are yielded can be obtained from a data aggregate including values of each of a plurality of variables with high accuracy.

**Claims**

1.  An information processing computer program causing a computer to execute a process comprising:

    obtaining a causal relationship including a plurality of explanatory variables and a response variable by performing causal discovery using a subset extracted from a data aggregate based on each of a plurality of conditions, the data aggregate including a value of each of the explanatory variables and a value of the response variable, the conditions being related to ranges of the values of the explanatory variables;
    obtaining a causal effect of any explanatory variable of the explanatory variables on the response variable based on the causal relationship obtained based on each of the conditions;
    obtaining a determination result of similarity in the causal effects obtained based on the respective conditions, by determining the similarity;
    obtaining an identified range of the value of each of the explanatory variables based on the determination result of the similarity, the causal effects having a predetermined sign in the identified range; and
    outputting range information indicating the identified range.

2.  The information processing computer program according to claim **1,** wherein the obtaining of the determination result of the similarity includes

    determining similarity between a first subset and a second subset, the first subset being extracted based on a first condition among the conditions, the second subset being extracted based on a second condition among the conditions, and

when the first subset is similar to the second subset and when a sign of a first causal effect is the same as a sign of a second causal effect, determining that the first causal effect is similar to the second causal effect, the first causal effect being obtained based on the first condition, the second causal effect being obtained based on the second condition.

3. The information processing computer program according to claim **2,** wherein the determining of the similarity between the first subset and the second subset includes, when a distance between a first causal graph and a second causal graph is less than a threshold, determining that the first subset is similar to the second subset, the first causal graph representing a first causal relationship obtained using the first subset, the second causal graph representing a second causal relationship obtained using the second subset.

4. The information processing computer program according to claim 1, wherein the obtaining of the determination result of the similarity includes

    obtaining a difference between a first causal effect and a second causal effect, the first causal effect being obtained based on a first condition among the conditions, the second causal effect being obtained based on a second condition among the conditions, and

    determining similarity between the first causal effect and the second causal effect based on the difference, a sign of the first causal effect, and a sign of the second causal effect.

5. The information processing computer program according to any one of claims 2 to 4, wherein the obtaining of the identified range includes, when a range of the value of each of the explanatory variables satisfying the second condition contains a range of the value of each of the explanatory variables satisfying the first condition and when it is determined that the first causal effect is similar to the second causal effect, obtaining the identified range based on the range of the value of each of the explanatory variables satisfying the second condition.

6. An information processing device comprising:

    a causal discovery unit (311, 512) that obtains a causal relationship including a plurality of explanatory variables and a response variable by performing causal discovery using a subset extracted from a data aggregate based on each of a plurality of conditions, the data aggregate including a value of each of the explanatory variables and a value of the response variable, the conditions being related to ranges of the values of the explanatory variables, and that obtains a causal effect of any explanatory variable of the explanatory variables on the response variable based on the causal relationship obtained based on each of the conditions;

    a determination unit (312, 515) that obtains a determination result of similarity in the causal effects obtained based on the respective conditions, by determining the similarity;

    a range identification unit (313, 516) that obtains an identified range of the value of each of the explanatory variables based on the determination result of the similarity, the causal effects having a predetermined sign in the identified range; and

    an output unit (314, 517) that outputs range information indicating the identified range.

7. The information processing device according to claim 6, wherein the determination unit (312, 515) determines similarity between a first subset and a second subset, the first subset being extracted based on a first condition among the conditions, the second subset being extracted based on a second condition among the conditions, and when the first subset is similar to the second subset and when a sign of a first causal effect is the same as a sign of a second causal effect, determines that the first causal effect is similar to the second causal effect, the first causal effect being obtained based on the first condition, the second causal effect being obtained based on the second condition.

8. The information processing device according to claim 7, wherein, when a distance between a first causal graph and a second causal graph is less than a threshold, the determination unit (312, 515) determines that the first subset is similar to the second subset, the first causal graph representing a first causal relationship obtained using the first subset, the second causal graph representing a second causal relationship obtained using the second subset.

9. The information processing device according to claim 6, wherein the determination unit (312, 515) obtains a difference between a first causal effect and a second causal effect, the first causal effect being obtained based on a first condition among the conditions, the second causal effect being obtained based on a second condition among the conditions, and determines similarity between the first causal effect and the second causal effect based on the difference, a sign of the first causal effect, and a sign of the second causal effect.

10. The information processing device according to any one of claims 7 to 9, wherein, when a range of the value of each of the explanatory variables satisfying the second condition contains a range of the value of each of the explanatory variables satisfying the first condition and when it is determined that the first causal effect is similar to the second causal effect, the range identification unit (313, 516) obtains the identified range based on the range of the value of each of the explanatory variables satisfying the second condition.

11. An information processing method for a computer to execute a process comprising:

obtaining a causal relationship including a plurality of explanatory variables and a response variable by performing causal discovery using a subset extracted from a data aggregate based on each of a plurality of conditions, the data aggregate including a value of each of the explanatory variables and a value of the response variable, the conditions being related to ranges of the values of the explanatory variables;
obtaining a causal effect of any explanatory variable of the explanatory variables on the response variable based on the causal relationship obtained based on each of the conditions;
obtaining a determination result of similarity in the causal effects obtained based on the respective conditions, by determining the similarity;
obtaining an identified range of the value of each of the explanatory variables based on the determination result of the similarity, the causal effects having a predetermined sign in the identified range; and
outputting range information indicating the identified range.

12. The information processing method according to claim 11, wherein the obtaining of the determination result of the similarity includes

determining similarity between a first subset and a second subset, the first subset being extracted based on a first condition among the conditions, the second subset being extracted based on a second condition among the conditions, and
when the first subset is similar to the second subset and when a sign of a first causal effect is the same as a sign of a second causal effect, determining that the first causal effect is similar to the second causal effect, the first causal effect being obtained based on the first condition, the second causal effect being obtained based on the second condition.

13. The information processing method according to claim 12, wherein the determining of the similarity between the first subset and the second subset includes, when a distance between a first causal graph and a second causal graph is less than a threshold, determining that the first subset is similar to the second subset, the first causal graph representing a first causal relationship obtained using the first subset, the second causal graph representing a second causal relationship obtained using the second subset.

14. The information processing method according to claim 11, wherein the obtaining of the determination result of the similarity includes

obtaining a difference between a first causal effect and a second causal effect, the first causal effect being obtained based on a first condition among the conditions, the second causal effect being obtained based on a second condition among the conditions, and
determining similarity between the first causal effect and the second causal effect based on the difference, a sign of the first causal effect, and a sign of the second causal effect.

15. The information processing method according to any one of claims 12 to 14, wherein the obtaining of the identified range includes, when a range of the value of each of the explanatory variables satisfying the second condition contains a range of the value of each of the explanatory variables satisfying the first condition and when it is determined that the first causal effect is similar to the second causal effect, obtaining the identified range based on the range of the value of each of the explanatory variables satisfying the second condition.

# FIG.1

| | CONDITION | FACTOR VARIABLE | CAUSAL EFFECT |
|---|---|---|---|
| C1 | TIME < 10:00 AND AIR TEMPERATURE < 10°C | AIR TEMPERATURE | −3.0 |
| C2 | TIME < 10:00 AND AIR TEMPERATURE < 15°C | AIR TEMPERATURE | −1.0 |
| C3 | TIME < 10:00 AND AIR TEMPERATURE < 20°C | AIR TEMPERATURE | −0.5 |
| C4 | TIME < 10:00 AND AIR TEMPERATURE < 25°C | AIR TEMPERATURE | +0.5 |

# FIG.2

# FIG.3

301

```
INFORMATION PROCESSING DEVICE

311 ―  CAUSAL
        DISCOVERY UNIT

312 ―  DETERMINATION
        UNIT

313 ―  RANGE
        IDENTIFICATION
        UNIT

314 ―  OUTPUT UNIT
```

# FIG.4

```
          START
            │
            ▼
┌──────────────────────────────┐
401 │    CAUSAL DISCOVERY          │
└──────────────────────────────┘
            │
            ▼
┌──────────────────────────────┐
402 │    OBTAIN CAUSAL EFFECT      │
└──────────────────────────────┘
            │
            ▼
┌──────────────────────────────┐
403 │ DETERMINE SIMILARITY OF CAUSAL EFFECT │
└──────────────────────────────┘
            │
            ▼
┌──────────────────────────────┐
404 │ OBTAIN IDENTIFIED RANGE IN WHICH CAUSAL │
    │ EFFECTS HAVE PREDETERMINED SIGN │
└──────────────────────────────┘
            │
            ▼
┌──────────────────────────────┐
405 │   OUTPUT RANGE INFORMATION   │
└──────────────────────────────┘
            │
            ▼
           END
```

# FIG.5

501

VARIABLE RANGE IDENTIFICATION DEVICE

518

511 CONDITION EXTRACTION UNIT

512 CAUSAL DISCOVERY UNIT

513 DISTANCE CALCULATION UNIT

514 RATE-OF-CHANGE CALCULATION UNIT

515 SIMILARITY DETERMINATION UNIT

516 GENERATION UNIT

517 OUTPUT UNIT

STORAGE UNIT

521 DATA AGGREGATE

522 CONDITION LIST

523 CAUSAL GRAPH

524 CAUSAL EFFECT INFORMATION

525 DISTANCE INFORMATION

526 RATE-OF-CHANGE INFORMATION

527 DETERMINATION RESULT

528 RANGE INFORMATION

## FIG.6

| ID | TIME (24-hour) | AIR TEMPERATURE (℃) | AMOUNT OF ELECTRICITY (kWh) |
|---|---|---|---|
| 2021041512 | 12 | 11 | 550 |
| 2021041513 | 13 | 12 | 500 |
| 2021041514 | 14 | 12 | 520 |
| 2021041515 | 15 | 14 | 520 |
| 2021041516 | 16 | 13 | 500 |
| 2021041517 | 17 | 11 | 500 |
| 2021041518 | 18 | 9 | 430 |
| 2021041519 | 19 | 8 | 290 |
| 2021041520 | 20 | 7 | 230 |
| 2021041521 | 21 | 6 | 190 |
| 2021041522 | 22 | 6 | 180 |
| 2021041523 | 23 | 5 | 160 |
| 2021041524 | 24 | 5 | 160 |
| 2021041601 | 1 | 5 | 140 |
| 2021041602 | 2 | 4 | 150 |
| 2021041603 | 3 | 4 | 140 |

EP 4 783 074 A1

# FIG.7

| | CONDITION |
|---|---|
| C11 | TIME < 10:00 AND AIR TEMPERATURE < 5℃ |
| C12 | TIME < 10:00 AND AIR TEMPERATURE < 10℃ |
| C13 | TIME < 10:00 AND AIR TEMPERATURE < 15℃ |
| C14 | TIME < 10:00 AND AIR TEMPERATURE < 20℃ |
| C15 | TIME < 10:00 AND AIR TEMPERATURE < 25℃ |
| C16 | TIME < 13:00 AND AIR TEMPERATURE < 5℃ |
| C17 | TIME < 13:00 AND AIR TEMPERATURE < 10℃ |
| C18 | TIME < 13:00 AND AIR TEMPERATURE < 15℃ |

# FIG.8A

# FIG.8B

# FIG.9

| | CONDITION | FACTOR VARIABLE | CAUSAL EFFECT |
|---|---|---|---|
| C11 | TIME < 10:00 AND AIR TEMPERATURE < 5°C | AIR TEMPERATURE | −3.5 |
| C12 | TIME < 10:00 AND AIR TEMPERATURE < 10°C | AIR TEMPERATURE | −3.0 |
| C13 | TIME < 10:00 AND AIR TEMPERATURE < 15°C | AIR TEMPERATURE | −1.0 |
| C14 | TIME < 10:00 AND AIR TEMPERATURE < 20°C | AIR TEMPERATURE | −0.5 |
| C15 | TIME < 10:00 AND AIR TEMPERATURE < 25°C | AIR TEMPERATURE | +0.5 |
| C16 | TIME < 13:00 AND AIR TEMPERATURE < 5°C | AIR TEMPERATURE | −2.0 |
| C17 | TIME < 13:00 AND AIR TEMPERATURE < 10°C | AIR TEMPERATURE | −1.5 |
| C18 | TIME < 13:00 AND AIR TEMPERATURE < 15°C | AIR TEMPERATURE | −0.5 |

## FIG.10A

|  | AIR TEMPERATUR | TIME | AMOUNT OF ELECTRICITY |
|---|---|---|---|
| AIR TEMPERATURE | 0 | −0.11 | 9.71 |
| TIME | 0 | 0 | −4.91 |
| AMOUNT OF ELECTRICITY | 0 | 0 | 0 |

## FIG.10B

|  | AIR TEMPERATUR | TIME | AMOUNT OF ELECTRICITY |
|---|---|---|---|
| AIR TEMPERATURE | 0 | 0 | 0.74 |
| TIME | 0 | 0 | 3.59 |
| AMOUNT OF ELECTRICITY | 0 | 0 | 0 |

EP 4 783 074 A1

FIG.11

EP 4 783 074 A1

# FIG.12

| FACTOR VARIABLE | SIGN | RANGE |
|---|---|---|
| AIR TEMPERATURE | POSITIVE | TIME > 13:00 AND AIR TEMPERATURE > 15℃ |
| AIR TEMPERATURE | NEGATIVE | TIME < 10:00 AND AIR TEMPERATURE < 10℃ |

# FIG.13

START

1301 — CONDITION EXTRACTION PROCESSING

1302 — CAUSAL DISCOVERY PROCESSING

1303 — DISTANCE CALCULATION PROCESSING

1304 — RATE-OF-CHANGE CALCULATION PROCESSING

1305 — SIMILARITY DETERMINATION PROCESSING

1306 — RANGE IDENTIFICATION PROCESSING

END

# FIG.14

```
                    ┌─────────────┐
                    │    START    │
                    └─────────────┘
                           │
                           ▼
1401 ─┐  ┌──────────────────────────────────────┐
      └──│         GENERATE INEQUALITY          │
         └──────────────────────────────────────┘
                           │
                           ▼
1402 ─┐  ┌──────────────────────────────────────┐
      └──│         GENERATE CONDITION           │
         └──────────────────────────────────────┘
                           │
                           ▼
1403 ─┐  ┌──────────────────────────────────────┐
      └──│          SELECT CONDITION            │
         └──────────────────────────────────────┘
                           │
                           ▼
1404 ─┐  ┌──────────────────────────────────────┐
      └──│          GENERATE SUBSET             │
         └──────────────────────────────────────┘
                           │
                           ▼
1405 ─┐  ┌──────────────────────────────────────┐
      └──│   CALCULATE CORRELATION COEFFICIENT  │
         └──────────────────────────────────────┘
                           │
                           ▼
1406 ─┐          IS NUMBER OF PIECES OF          NO
      └──      DATA ≥ TA SATISFIED?        ─────────►
                           │
                          YES
                           ▼
1407 ─┐        IS ABSOLUTE VALUE OF              NO
      └──   CORRELATION COEFFICIENT ≥      ─────────►
                 TB SATISFIED?
                           │
                          YES
                           ▼
1408 ─┐  ┌──────────────────────────────────────┐
      └──│   ADD CONDITION TO CONDITION LIST    │
         └──────────────────────────────────────┘
                           │
                           ▼
1409 ─┐        HAVE ALL CONDITIONS              NO
      └──        BEEN SELECTED?           ─────────►
                           │
                          YES
                           ▼
                    ┌─────────────┐
                    │     END     │
                    └─────────────┘
```

# FIG.15

```
                        ┌─────────┐
                        │  START  │
                        └─────────┘
                             │
1501 ──────┐  ┌──────────────────────────────┐
           └──│       SELECT CONDITION        │
              └──────────────────────────────┘
                             │
1502 ──────┐  ┌──────────────────────────────┐
           └──│        GENERATE SUBSET        │
              └──────────────────────────────┘
                             │
1503 ──────┐  ┌──────────────────────────────┐
           └──│  STATISTICAL CAUSAL DISCOVERY  │
              └──────────────────────────────┘
                             │
1504 ──────┐  ┌──────────────────────────────┐
           └──│   SELECT EXPLANATORY VARIABLE  │
              └──────────────────────────────┘
                             │
1505 ──────┐  ┌──────────────────────────────┐
           └──│     CALCULATE CAUSAL EFFECT    │
              └──────────────────────────────┘
                             │
1506 ──────┐        ╱────────────────╲         NO
           └────── ╱   HAVE ALL        ╲ ───────────
                   ╲ EXPLANATORY VARIABLES╱
                   ╲  BEEN SELECTED?    ╱
                    ╲────────────────╱
                          │ YES
1507 ──────┐        ╱────────────────╲         NO
           └────── ╱   HAVE ALL        ╲ ───────────
                   ╲   CONDITIONS      ╱
                   ╲  BEEN SELECTED?  ╱
                    ╲────────────────╱
                          │ YES
                     ┌─────────┐
                     │   END   │
                     └─────────┘
```

# FIG.16

START

1601 — SELECT COMBINATION OF CONDITIONS

1602 — CALCULATE DISTANCE BETWEEN CAUSAL GRAPHS

1603 — HAVE ALL COMBINATIONS BEEN SELECTED?　NO

YES

END

# FIG.17

START

1701 — SELECT COMBINATION OF CONDITIONS

1702 — SELECT EXPLANATORY VARIABLE

1703 — ACQUIRE CAUSAL EFFECTS

1704 — CALCULATE RATE OF CHANGE IN CAUSAL EFFECT

1705 — HAVE ALL EXPLANATORY VARIABLES BEEN SELECTED? — NO

YES

1706 — HAVE ALL COMBINATIONS BEEN SELECTED? — NO

YES

END

# FIG.18

```
                    ┌─────────────┐
                    │    START    │
                    └─────────────┘
                           │
1801 ──  ┌──────────────────────────────────┐
         │  SELECT COMBINATION OF           │
         │  CONDITIONS                      │
         └──────────────────────────────────┘
                           │
1802 ──  ┌──────────────────────────────────┐
         │  ACQUIRE DISTANCE BETWEEN        │
         │  CAUSAL GRAPHS                   │
         └──────────────────────────────────┘
                           │
1803 ──  ┌──────────────────────────────────┐
         │  SELECT EXPLANATORY VARIABLE     │
         └──────────────────────────────────┘
                           │
1804 ──  ┌──────────────────────────────────┐
         │  ACQUIRE CAUSAL EFFECTS          │
         └──────────────────────────────────┘
                           │
1805 ──  ┌──────────────────────────────────┐
         │  ACQUIRE RATE OF CHANGE IN       │
         │  CAUSAL EFFECT                   │
         └──────────────────────────────────┘
                           │
1806 ──  ◇ ARE SIGNS OF CAUSAL EFFECTS SAME? ◇ ── NO
                           │ YES
1807 ──  ◇ D < T1? ◇ ── YES
                           │ NO
1808 ──  ◇ |R| < T2? ◇ ── NO
                           │ YES
1809 ──  ┌──────────────────────┐      1812 ┌──────────────────────┐
         │ CAUSAL EFFECTS ARE   │           │ CAUSAL EFFECTS ARE   │
         │ SIMILAR              │           │ NOT SIMILAR          │
         └──────────────────────┘           └──────────────────────┘
                           │
1810 ──  ◇ HAVE ALL EXPLANATORY VARIABLES BEEN SELECTED? ◇ ── NO
                           │ YES
1811 ──  ◇ HAVE ALL COMBINATIONS BEEN SELECTED? ◇ ── NO
                           │ YES
                    ┌─────────────┐
                    │     END     │
                    └─────────────┘
```

# FIG.19

```
          ┌─────────────┐
          │    START    │
          └──────┬──────┘
                 │
                 ▼
1901  ┌──────────────────────────────┐
      │   SELECT CONDITION INDICATING │
      │   NARROWEST NUMERICAL RANGE   │
      └──────────────┬───────────────┘
                     │
                     ▼
1902  ┌──────────────────────────────┐
      │    RANGE UPDATE PROCESSING     │
      └──────────────┬───────────────┘
                     │
                     ▼
1903        ◇ DOES CAUSAL EFFECT HAVING          NO
            DIFFERENT SIGN EXIST? ◇ ──────────────┐
                     │ YES                         │
                     ▼                             │
1904  ┌──────────────────────────────┐            │
      │   SELECT CONDITION INDICATING │            │
      │   NARROWEST NUMERICAL RANGE   │            │
      └──────────────┬───────────────┘            │
                     │                             │
                     ▼                             │
1905  ┌──────────────────────────────┐            │
      │    RANGE UPDATE PROCESSING     │◄──────────┘
      └──────────────┬───────────────┘
                     ▼
1906  ┌──────────────────────────────┐
      │    OUTPUT RANGE INFORMATION    │
      └──────────────┬───────────────┘
                     │
                     ▼
          ┌─────────────┐
          │     END     │
          └─────────────┘
```

# FIG.20

START

2001 — SET SELECTED CONDITION TO CONDITION CX

2002 — ADD NUMERICAL RANGE INDICATED BY CONDITION CX TO RANGE INFORMATION

2003 — SELECT CONDITION CY

2004 — ARE CAUSAL EFFECTS OF CONDITION CX AND CONDITION CY SIMILAR?

NO

YES

2005 — OVERWRITE NUMERICAL RANGE INDICATED BY CONDITION CY WITH NUMERICAL RANGE INDICATED BY CONDITION CX

2006 — SET CONDITION CY TO CONDITION CX

2007 — DOES UNSELECTED CONDITION CONTAINING CONDITION CX EXIST?

YES

NO

END

# FIG.21

2101 CPU

2108

2105 AUXILIARY STORAGE DEVICE

2102 MEMORY

2106 MEDIUM DRIVE DEVICE

2109 PORTABLE RECORDING MEDIUM

2103 INPUT DEVICE

2107 NETWORK CONNECTION DEVICE

2104 OUTPUT DEVICE

## EUROPEAN SEARCH REPORT

**Application Number**

EP 25 22 6118

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2024/004384 A1 (SONY GROUP CORP [JP]) 4 January 2024 (2024-01-04) * abstract; claims 1-20; figures 1-24 * * paragraph [0001] - paragraph [0128] * ----- | 1-15 | INV. G06N7/00 ADD. G06N5/022 |
| A | ZHOU YANG ET AL: "Predicting sectoral electricity consumption based on complex network analysis", APPLIED ENERGY. ELSEVIER SCIENCE PUBLISHERS., GB, vol. 255, 14 September 2019 (2019-09-14), XP085862356, ISSN: 0306-2619, DOI: 10.1016/J.APENERGY.2019.113790 [retrieved on 2019-09-14] * page 1 - page 10, right-hand column, paragraph 2 * ----- | 1-15 | |

**TECHNICAL FIELDS SEARCHED (IPC)**

G06N

The present search report has been drawn up for all claims

| Place of search | Date of completion of the search | Examiner |
|---|---|---|
| The Hague | 16 April 2026 | Volkmer, Markus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 22 6118

This annex lists the patent family members relating to the patent documents cited in the above-mentioned European search report.
The members are as contained in the European Patent Office EDP file on
The European Patent Office is in no way liable for these particulars which are merely given for the purpose of information.

16-04-2026

| Patent document cited in search report | Publication date | Patent family member(s) | | Publication date |
|---|---|---|---|---|
| WO 2024004384 A1 | 04-01-2024 | US | 2025384109 A1 | 18-12-2025 |
| | | WO | 2024004384 A1 | 04-01-2024 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018096683 A

- JP 2023063162 A